# EUROPEAN PATENT SPECIFICATION

(11) **EP 1 818 360 B1**
(45) Date of publication and mention of the grant of the patent: **07.10.2009**
(21) Application number: 07000263.9
(22) Date of filing: 08.01.2007
(51) Int. Cl.: C08K 3/34, C08K 9/04, C08J 5/00

(54) **Polymer exfoliated phyllosilicate nanocomposite compositions and a process for the preparation thereof**
Polymere exfolierte Phyllosilicatnanokompositzusammensetzungen und Herstellungsverfahren dafür
Compositions nanocomposites de phyllosilicate exfoliée polymère et leur procédé de préparation

(30) Priority: 13.02.2006 IN DE04012006
(43) Date of publication of application: 15.08.2007
(73) Proprietor: Council of Scientific and Industrial Research, New Delhi 110 001 (IN)
(72) Inventor: Shroff Rama Mallikarjuna National Chemical Laboratory, Pune 411 008 (Maharashtra) (IN); Swaminathan Sivaram National Chemical Laboratory, Pune 411 088 (Maharashtra) (IN)
(74) Representative: Grünecker, Kinkeldey, Stockmair & Schwanhäusser Anwaltssozietät

(56) References cited:
- US-A1- 4 889 885
- US-A1- 5 554 670
- US-B1- 6 262 162
- US-B1- 6 683 122
- ALEXANDRE M ET AL: "Polymer-layered silicate nanocomposites: preparation, properties and uses of a new class of materials" MATERIALS SCIENCE AND ENGINEERING R: REPORTS, ELSEVIER SEQUOIA S.A., LAUSANNE, CH, vol. 28, no. 1-2, June 2000 (2000-06), pages 1-63, XP004205143 ISSN: 0927-796X

## Description

The present invention relates to polymer exfoliated phyllosilicate nanocomposites compositions and process for preparation thereof.

Nanocomposites are defined as the particle filled composites of which the particle should have atleast one dimension in the nanometer range. Phyllosilicates when dispersed in the polymer matrix will have a plate like structure in which the thickness of the plate is one nanometre. These nanocomposites are ideally classified into conventional composites, intercalated nanocomposites, intercalated-flocculated nanocomposites and exfoliated nanocomposites.

It is known that organophilic phyllosilicates prepared, for example, by ion exchange, can be used as fillers for thermoplastic materials and also for thermosets, giving nanocomposites. When suitable organophilic phyllosilicates are used as fillers, the physical and mechanical properties of the moldings thus produced are considerably improved. A particular interesting feature is the increase in stiffness with no decrease in toughness. Nanocomposites, which comprise the phyllosilicate in exfoliated form, have particularly good properties.

Nanocomposites have been demonstrated to produce dramatic improvements in mechanical properties, heat resistance, thermal stability, and reduced gas permeability of the base polymer without loss of impact strength. Due to their enhanced barrier properties and clarity, nanocomposites are well suited for use as gas transport barriers in packaging applications. Examples include nylon-based nanocomposites for food and beverage packaging, which incorporate the nanocomposite layer within single or multi-layer films. Reduction in gas diffusion is attributed to the presence of the clay particles, which act to increase diffusion path length.

U.S. Pat. No. 4,810,734 has disclosed that phyllosilicates can be treated with a quaternary or other ammonium salt of a primary, secondary or tertiary linear organic amine in the presence of a dispersing medium. During this there is ion exchange or cation exchange, where the cation of the ammonium salt becomes embedded into the space between the layers of the phyllosilicate. The organic radical of the absorbed amine makes phyllosilicates modified in this way organophilic. When this organic radical comprises functional groups the organophilic phyllosilicate is able to enter into chemical bonding with a suitable monomer or polymer.

There are many examples in the patent literature of polymer/clay nanocomposites prepared from monomers and treated clays. For example, U.S. Pat. No. 4,739,007 discloses the preparation of Nylon-6/clay nanocomposites from caprolactam and alkyl ammonium-treated montmorillonite.

However the above-mentioned phyllosilicates which are modified with alkylammonium cations undergo degradation at the temperatures above 250 °C as illustrated in the published literature, Xie et. al., Chemistry of Materials, 2001 13, 2979 -2990, the disclosures of which are incorporated by reference herein. The decomposition of these modifiers during the preparation of nanocomposites or during processing leads to degradation of the polymers by chain scission reactions, color formation etc. The formation of decomposition products can lead to emissions and to impairment of mechanical properties, for example impact strength. For the preparation of polymer/clay nanocomposites wherein the polymer resins such as polycarbonates, polyethylene terepthalate, or any other polymer whose processing temperatures are above the 250 °C, requires treatment with modifiers, which are thermally stable. The use of thermally stable modifiers based on cyclic amidinium ions is disclosed in the US. Pat. Nos. 5530052, 5707439, 6197849, 20040033392A1. The use of thermally stable modifiers based on phosphonium ions is disclosed in US. Pat. Nos. 6057035, 6287992, 6262162, 6359052. However the dispersion of layered phyllosilicates, which are modified with such amidinium or phosphonium based surfactants, in the polymer resin was poor and always resulted in intercalated nanocomposites wherein the clay platelets are still remain intact and polymer chains have intercalated in between the clay gallery and increase the interlayer distance. Polycarbonate nanocomposites, as disclosed in US. Pat. Nos. 2004/0030021 A1, have resulted in only intercalated nanocomposites and sometimes decrease in interlayer distance for the phyllosilicate due to deintercalation of the modifier itself. It is shown that maximum improvement in the properties can be exploited only when the platelets are completely delaminated/exfoliated in the polymer resin matrix. It is also shown that when the modifier is capable of anchoring the polymer chains will enhance interaction of the polymer resin with the phyllosilicate layered platelets and under suitable process in making the nanocomposite result in fully exfoliated nanocomposites.

US-B1-6683122 discloses a filler mixture comprising an organophilic layer silicate obtainable by a treatment of a natural or synthetic layer silicate with a swelling agent selected from sulfonium, phosphonium and ammonium compounds, and a mineral filler which is different therefrom in order to yield a combination with thermosetting resin nanocomposites having improved mechanical properties.

US-A1-4889885 discloses a composite material comprising a resin other than a polyamide resin and a layer silicate dispersed therein, wherein the layered silicate is obtained from an ion exchange of a layered clay with an onium salt.

US-B1-6262162 relates to intercalated layered materials prepared by cointercalation of a multi-charged onium ion spacing/coupling agent and a matrix polymer between the planar layers of a swellable layered material, such as a phyllosilicate.

US-A1-554670 relates to a method for preparing an epoxy-smectite clay nanocomposite, comprising dispersing a smectite clay in a dry state into a liquid diglycidyl ether or bisphenol A, said smectite-type clay having been modified to an organo-clay by ion exchange with an alkyl ammonium salt.

Alexandre et al., "Polymer-layered silicate nanocomposites: preparation, properties and uses of a new class of materials", Materials Science and Engineering, 20 (2000), 1-63, relates to polymer-layered silicate based on smectite clays usually rendered hydrophobic through ionic exchange of the sodium interlayer cation with an onium ion.

### Objectives of the invention

The main object of the present invention is to provide nanocomposite compositions in which the intercalated layered material (organophyllosilicate) is completely dispersed or exfoliated into the matrix polymer.

Another object of the present invention is to provide nanocomposite compositions wherein the intercalated layered material comprises of alkylonium ions having reactive moiety.

Yet another object of the present invention is to provide intercalated layered materials wherein the alkylonium ion having reactive moiety is stable at temperatures of preparation and processing of the nanocomposite compositions.

Yet another object of the present invention is to provide nanocomposite compositions wherein the alkylonium ions having reactive moiety associated with the layered material is substantially covalently linked to or compatabilizing the matrix polymer chain.

Still another object of the present invention is to provide process for production of the intercalated layered material (organophyllosilicate).

Still another object of the present invention is to provide processes for dispersing the intercalated layered material in the matrix polymer to produce nanocomposite compostions.

### Summary of the invention

The present invention provides a polymer-phyllosilicate nanocomposite composition comprising
a. 10-99.95 % by weight of a matrix polymer and
b. 0.05-90% by weight of a phyllosilicate selected from the group consisting of hydrophilic synthetic phyllosilicates and natural phyllosilicates intercalated with an alkylonium ion having a reactive moiety, wherein the alkylonium ion is a 2,2-bis(4-hydroxyphenyl)alkylonium salt having the formula I, 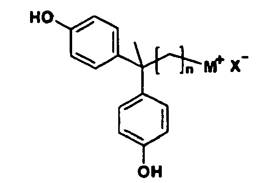
where n = 1 to 37, M= trialkylphosphonium, triarylphosphonium, triarylalkylphosphonium, ammonium or substituted cylic amidinium radical selected from the group consisting of pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, and dipyridyl, X = Cl, Br, I, BF₄, OTf, or NTf₂.

The present invention further provides a process for the preparation of the above polymer-phyllosilicate nanocomposite composition comprising the steps of
a. mixing 10-99.95 % by weight of a matrix polymer and 0.05-90% by weight of a phyllosilicate selected from the group consisting of hydrophilic synthetic phyllosilicates and natural phyllosilicates intercalated with a modifier and an alkylonium ion having reactive moiety, wherein the alkylonium ion is a 2,2-bis(4-hydroxyphenyl)alkylonium salt having the formula I, 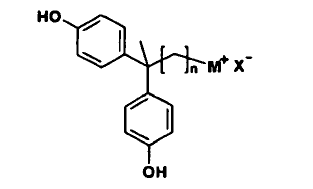 where n=1 to 37, M= trialkylphosphonium, triarylphosphonium, triarylalkylphosphonium, ammonium or substituted cylic amidinium radical selected from the group consisting of pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, and dipyridyl, X = Cl, Br, I, BF₄, OTf, or NTf₂.
b. intercalating a layered silicate material by contacting it with alkylonium ions having reactive group to obtain the intercalated layered material,
c. mixing the above said intercalated layered material with a melt of the matrix polymer, under stirring, to intercalate and exfoliate the said matrix polymer between adjacent platelets of the layered silicate material to obtain the desired polymer-exfoliated phyllosilicate nanocomposite composition.

### Preferred embodiments are set forth in the subclaims.

The present invention provides a polymer-phyllosilicate nanocomposite composition comprising (a) 10-99.95 % by weight of a matrix polymer and (b) 0.05-90% by weight of a phyllosilicate selected from the group consisting of hydrophilic synthetic phyllosilicates and natural phyllosilicates intercalated with a modifier, an alkylonium ion having reactive moiety which is capable of compatiblize or covalently link to the matrix polymer chains; wherein the phyllosilicate is substantially homogeneously dispersed and/or exfoliated throughout the polymer matrix as nanosized particles and the alkylonium ion is substantially covalently linked to the matrix polymer chains and a process for producing the same wherein, the process includes contacting, and thereby intercalating, a layered silicate material, e.g., a phyllosilicate, with an alkylonium ion having atleast one reactive moiety and co-intercalation of the layered material with a co-intercalant (as co-intercalant polymerizable reactants, or as the oligomer co-intercalant or polymer co-intercalant) to form nanocomposite materials in which, the co-intercalant monomer, oligomer or polymer can be intercalated after or together with intercalation of the alkylonium ion having reactive moiety such as by direct compounding, e.g., by combining a alkylonium ion having reactive moiety-intercalated layered material and a co-intercalant monomer, polymer or oligomer in a mixing or extruding device to produce the co-intercalated layered material and the nanocomposite or by combining a alkylonium ion having reactive moiety-intercalated layered material and a co-intercalant monomer, or oligomer reactants capable of polymerizing to form said matrix polymer, while in contact with said intercalate, and subjecting the mixture to conditions sufficient to polymerize said reactants to form said matrix polymer in the nanocomposite.

In accordance of the present invention the matrix polymers in the practice of this invention may vary widely from thermoplastics to thermosetting polymers. Illustrative of useful thermoplastic resins, which may be used alone or in admixture, are polyactones such as poly(pivalolactone), poly(caprolactone) and the like; polyurethanes derived from reaction of diisocyanates such as 1,5-naphthalene diisocyanate; p-phenylene diisocyanate, m-phenylene diisocyanate, 2,4-toluene diisocyanate, 4,4'-diphenylmethane diisocyanate, 3,3'-dimethyl-4,4'-biphenyl diisocyanate, 4,4'-diphenylisopropylidene diisocyanate, 3,3'-dimethyl-4,4'-diphenyl diisocyanate, 3,3'-dimethyl-4,4'-diphenylmethane diisocyanate, 3,3'-dimethoxy-4,4'-biphenyl diisocyanate, dianisidine diisocyanate, toluidine diisocyanate, hexamethylene diisocyanate, 4,4'-diisocyanatodiphenylmethane and the like and linear long-chain diols such as poly(tetramethylene adipate), poly(ethylene adipate), poly(1,4-butylene adipate), poly(ethylene succinate), poly(2,3-butylene succinate), polyether diols and the like; polycarbonates such as poly[methane bis(4-phenyl) carbonate], poly[1,1-ether bis(4-phenyl) carbonate], poly[diphenylmethane bis(4-phenyl)carbonate], poly[1,1-cyclohexane bis(4-phenyl)carbonate] and the like; polysulfones; polyethers; polyketones; polyamides such as poly(4-amino butyric acid), poly(hexamethylene adipamide), poly(6-aminohexanoic acid), poly(m-xylylene adipamide), poly(p-xylylene sebacamide), poly(2,2,2-trimethyl hexamethylene terephthalamide), poly(metaphenylene isophthalamide), poly(p-phenylene terephthalamide), and the like; polyesters such as poly(ethylene azelate), poly(ethylene-1,5-naphthalate, poly(1,4-cyclohexane dimethylene terephthalate), poly(ethylene oxybenzoate), poly(para-hydroxy benzoate), poly(1,4-cyclohexylidene dimethylene terephthalate) (cis), poly(1,4-cyclohexylidene dimethylene terephthalate) (trans), polyethylene terephthalate, polybutylene terephthalate and the like; poly(arylene oxides) such as poly(2,6-dimethyl-1,4-phenylen- e oxide), poly(2,6-diphenyl-1,4-phenylene oxide) and the like; poly(arylene sulfides) such as poly(phenylene sulfide) and the like; polyetherimides; vinyl polymers and their copolymers such as polyvinyl acetate, polyvinyl alcohol, polyvinyl chloride; polyvinyl butyral, polyvinylidene chloride, ethylene-vinyl acetate copolymers, and the like; polyacrylics, polyacrylate and their copolymers; ionomers; poly(epichlorohydrins); poly(urethane) such as the polymerization product of diols such as glycerin, trimethylol-propane, 1,2,6-hexanetriol, sorbitol, pentaerythritol, polyether polyols, polyester polyols and the like with a polyisocyanate such as 2,4tolylene diisocyanate, 2,6-tolylene diisocyante, 4,4'-diphenylmethane diisocyanate, 1 ,6-hexamethylene diisocyanate, 4,4'-dicyclohexyl-methane diisocyanate and the like; and polysulfones such as the reaction product of the sodium salt of 2,2-bis(4-hydroxyphenyl) propane and 4,4'-dichlorodiphenyl sulfone; furan resins such as poly(furan); and blends of two or more of the foregoing.

The present invention provides a polymer-phyllosilicate nanocomposite composition comprising (a) 10-99.95 % by weight of a matrix polymer and (b) 0.05-90% by weight of a phyllosilicate selected from the group consisting of hydrophilic synthetic phyllosilicates and natural phyllosilicates intercalated with a modifier, an alkylonium ion having reactive moiety, the polyamides for use as a matrix polymer are those formed by polymerization of amino acids and derivatives thereof, as, for example, lactams. Illustrative of these useful polyamides are poly(4-aminobutyric acid) (nylon 4), poly(6-aminohexanoic acid) (nylon 6), poly(7-aminoheptanoic acid) (nylon 7), poly(8-aminooctanoic acid) (nylon 8), poly(9-10-aminononanoic acid) (nylon 9), poly(10-aminodecanoic acid) (nylon 10), poly(11-aminoundecanoic acid) (nylon 11), poly(12-aminododecanoic acid) (nylon 12) and the like. Other useful polyamides, generally known in the art as nylons, obtained from condensation of diamines and dibasic acids having the recurring unit represented by the general formula:

-NHCOR¹COHNR²-

in which R¹ is an alkylene group of at least 2 carbon atoms, preferably from about 2 to about 18; or arylene having at least about 6 carbon atoms, preferably about 6 to about 17 carbon atoms; and R² is selected from R¹ and aryl groups. In yet another embodiment of the present invention, the polyester chosen for use as a matrix polymer can be a homo-polyester or a copolyester, or mixtures thereof, as desired. Polyesters are normally prepared by the condensation of an organic dicarboxylic acid and an organic diol, and, the reactants can be added to the intercalates, or exfoliated intercalates for in situ polymerization of the polyester while in contact with the layered material, before or after exfoliation of the intercalates. Polyesters which are suitable for use as matrix polymers in this embodiment of the invention are those which are derived from the condensation of aromatic, cycloaliphatic, and aliphatic diols with aliphatic, aromatic and cycloaliphatic dicarboxylic acids and may be cycloaliphatic, aliphatic or aromatic polyesters.

The present invention provides a polymer-phyllosilicate nanocomposite composition comprising (a) 10-99.95 % by weight of a matrix polymer and (b)0.05-90% by weight of a phyllosilicate selected from the group consisting of hydrophilic synthetic phyllosilicates and natural phyllosilicates intercalated with a modifier, an alkylonium ion having reactive moiety, the most preferred thermoplastic polymers for use as matrix polymer such as polycarbonates, more particularly the polycarbonates derived from the condensation of bisphenol-A and diphenyl carbonate.

In accordance of the present invention, the other polycarbonates useful as matrix polymer include homopolymers, copolymers or blends of the polymers derived from the condensation of diphenols and corbonate precursors. The copolycarbonates may also contain units corresponding to the dihydroxy compounds disclosed by name or formula (generic or specific) in U.S. Pat. No. 4,217,438. Other useful polycarbonates comprises the units which include those having the formula II 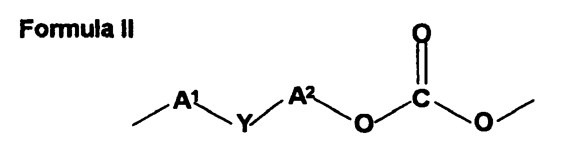 wherein each of A¹ and A² is a monocyclic divalent aromatic radical and Y is a bridging radical in which one or two atoms separate A¹ from A². The free valence bonds in formula m are usually in the meta or para positions of A¹ and A² in relation to Y. The A¹ and A² values may be unsubstituted phenylene or substituted derivatives thereof, illustrative substituents (one or more) being alkyl, alkenyl, halo (especially chloro and/or bromo), nitro, alkoxy and the like. Unsubstituted phenylene radicals are preferred. Both A¹ and A² are preferably p-phenylene, although both may be o- or m-phenylene or one o- or m-phenylene and the other p-phenylene. The bridging radical, Y, is one in which one or two atoms, preferably one, separate A¹ from A². It is most often a hydrocarbon radical and particularly a saturated radical such as methylene, cyclohexylmethylene, 2-[2.2.1]-bicyclohep-tylmethylene, ethylene, isopropylidene, neopentylidene, cyclohexylidene, cyclopentadecylidene, cyclododecylidene or adamantylidene, especially a gem-alkylene (alkylidene) radical. Also included, however, are unsaturated radicals and radicals which contain atoms other than carbon and hydrogen; for example, 2,2-dichloroethylidene, carbonyl, phthalidyhdene, oxy, thio, sulfoxy and sulfone. For reasons of availability and particular suitability for the purposes of this invention, the preferred units of formula II are 2,2-bis(4-phenylene)propane carbonate units, which are derived from bisphenol A and in which Y is isopropylidene and A¹ and A² are each p-phenylene.

In accordance of the present invention, the phyllosilcate may be from the group of useful swellable materials include but not limited to phyllosilicates, such as smectite clay minerals, e.g., montmorillonite, particularly sodium montmorillonite; magnesium montmorillonite and/or calcium montmorillonite; nontronite; beidellite; volkonskoite; hectorite; saponite; sauconite; sobockite; stevensite; svinfordite; vermiculite; and the like. Other useful layered materials include micaceous minerals, such as illite and mixed layered illite/smectite minerals, such as rectorite, tarosovite, ledikite and admixtures of illites with the clay minerals named above.

In accordance of the present invention, the swellable layered materials are phyllosilicates of the 2:1 type having a negative charge on the layers ranging from about 0.15 to about 0.9 charges per formula unit and a commensurate number of exchangeable metal cations in the interlayer spaces. Most preferred layered materials are smectite clay minerals such as montmorillonite, nontronite, beidellite, volkonskoite, hectorite, saponite, sauconite, sobockite, stevensite, svinfordite and combinations thereof.

In accordance of the present invention, the modifier is an alkylonium ion selected from the novel class of 2,2-bis(4-hydroxyphenyl)alkylonium salts having the formula I, where n=1 to 37, M= trialkylphosphonium or triarylphosphonium or triarylalkylphosphonium or substituted cyclic amidinium radical which include pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, or dipyridyl X= Cl, Br, I, BF₄, OTf, NTf₂.

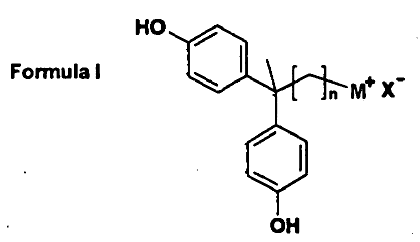

In an embodiment of the present invention the modifier is chosen such that they are stable after intercalating and sorbed into the layered material at temperatures of production and processing of the nanocomposite.

In an embodiment of the present invention, the process for the preparation of polymer -exfoliated phyllosilicate nanocomposite compositions involves preparation by contacting, and thereby intercalating, a layered silicate material, e.g., a phyllosilicate, such as a smectite clay, with an alkylonium ion having atleast one reactive moiety and co-intercalation of the layered material with a co-intercalant (as co-intercalant polymerizable reactants, or as the oligomer co-intercalant or polymer co-intercalant) to form nanocomposite materials. The co-intercalant monomer, oligomer or polymer can be intercalated after or together with intercalation of the alkylonium ion having reactive moiety such as by direct compounding, e.g., by combining a alkylonium ion having reactive moiety-intercalated layered material and a co-intercalant monomer, polymer or oligomer in a mixing or extruding device to produce the co-intercalated layered material and the nanocomposite. The interlaminar spacing of adjacent layers (platelets) of the layered material (d-spacing minus one platelet thickness of the layered material) is expanded by at least 3Å, preferably by at least 5 Å, by at least about 10 Å, preferably by at least about 15 Å, and usually by about 18 A by contacting the layered material with the alkylonium ion having reactive moiety for simultaneous or subsequent intercalation with co-intercalant polymerizable reactants, an oligomer co-intercalant or a polymer co-intercalant. The alkylonium ion having reactive moiety have atleast one phenol group, preferably a bisphenol group and ion-exchange atoms capable of ion-exchanging with Li⁺, Na⁺, K⁺, Ca⁺², Mg⁺², or other inorganic cations that occur within the interlayer spaces between adjacent silicate layers or platelets of the layered silicate materials being intercalated. The exchange of layered material inorganic cations with alkylonium ions having reactive groups not only enables the conversion of the hydrophilic interior clay platelet surfaces to organophilic platelet surfaces but also can form covalent link by reacting and/or compatabilize with the co-intercalant monomer, oligomer or polymer, which forms the matrix polymer.

In accordance of the present invention, a fully polymerized co-intercalant polymer, having a weight average molecular weight between about 100 and about 5 million, preferably about 1,000 to about 500,000, can be co-intercalated between adjacent platelets of the alkylonium ion having reactive moiety-intercalated layered material, preferably simultaneously with dispersing or exfoliating the multi-charged onium ion-intercalated layered material into a matrix polymer. The matrix polymer or the oligomer or the monomers can be compounded with the layered material simultaneously or subsequently after the intercalation of the alkylonium ion having the reactive moiety into the layered material to exfoliate upto 100% of the tactoids into individual platelets such that more than 50% by weight of the patelets are in the form of single platelets, e.g., more than 60%; more than 70%; more than 80%; or more than 90% by weight of the layered material can be completely exfoliated.

In accordance with the preferred embodiment of the present invention, the monomers, which can be polymerized to form the matrix polymer under suitable conditions is mixed with organophyllosilicate, which is obtained by modifying with alkylonium ion having reactive moiety and stable at temperatures of polymerization and then polymerized in-situ to form the nanocomposite compositions.

In accordance of the present invention, exfoliates can be prepared from intercalate or intercalate concentrate composition by diluting it in a (or additional) matrix polymer wherein intercalate or the intercalate concentrate compositions are obtained by direct compounding of the intercalated layered material with a matrix polymer melt, one or more matrix polymers or mixing the intercalated layered material with the monomers and polymerized in-situ under suitable conditions to get the matrix polymer.

In accordance of the present invention, to form the nanocomposite compositions, the layered material, e.g., the phyllosilicate, which is swelled or intercalated by sorption of an alkylonium ion having reactive moiety to form intercalated layered material (organophyllosilicates) is simultaneously or subsequently co-intercalated with a co-intercalant polymerizable monomer, oligomer or polymer.

In accordance of the present invention alkylonium ion having reactive moiety is selected from the novel class of 2,2-bis(4-hydroxyphenyl)alkylonium salts having the formula I, where n=1 to 37, M= trialkylphosphonium or triarylphosphonium or triarylalkylphosphonium or substituted cylic amidinium radical which include pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, or dipyridyl X= Cl, Br, I, BF₄, OTf, NTf₂,

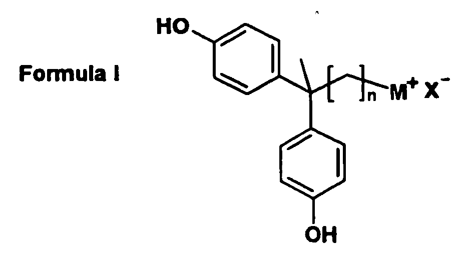

In accordance of the present invention, any swellable layered material that sufficiently sorbs the alkylonium ion having reactive moiety to increase the interlayer spacing between the adjacent phyllosilicate platelets by atleast 3 Å, preferably by atleast 5 Å, by atleast about 10 Å, preferably by atleast about 15 A can be used in practice of this invention. Useful swellable materials include but not limited to phyllosilicates, such as smectite clay minerals, e.g., montmorillonite, particularly sodium montmorillonite; magnesium montmorillonite and/or calcium montmorillonite; nontronite; beidellite; volkonskoite; hectorite; saponite; sauconite; sobockite; stevensite; svinfordite; vermiculite; and the like. Other useful layered materials include micaceous minerals, such as illite and mixed layered illite/smectite minerals, such as rectorite, tarosovite, ledikite and admixtures of illites with the clay minerals named above.

In accordance of the present invention, the preferred swellable layered materials are phyllosilicates of the 2:1 type having a negative charge on the layers ranging from about 0.15 to about 0.9 charges per formula unit and a commensurate number of exchangeable metal cations in the interlayer spaces. Most preferred layered materials are smectite clay minerals such as montmorillonite, nontronite, beidellite, volkonskoite, hectorite, saponite, sauconite, sobockite, stevensite, and svinfordite.

In accordance of the present invention, the amount of alkylonium ion having reactive moiety intercalated in to the swellable layered materials, in order that the intercalated layered material platelet surfaces sufficiently ion exchange with the alkylonium ions having reactive moiety such that the adjacent platelets of the layered material may be sufficiently spaced for easy co-intercalation of a polymeric or polymerizable co-intercalant, may be of the molar ratio of alkylonium ions having reactive moiety:phyllosilicate interlayer exchangeable cations of at least about 0.25:1, preferably atleast 0.50:1, more preferably of atleast 1:1.

In accordance of the present invention, the alkylonium ion having reactive moiety may be introduced into (sorbed within) the interlayer spaces of the layered material in a number of ways. In a preferred method of intercalating the alkylonium ion having reacting group between the layered material, the layered material is slurried in water, e.g., at 5-20% by weight layered material and 80-95% by weight water, and the alkylonium ion having the reactive moiety, dissolved in water or any other alcoholic solvent, is added to the slurried layered material and stirred for 0.5 to 24h at temperatures chosen in the range of 20 to 100 °C. The layered material then filtered and can be washed with suitable solvent to remove the excess alkylonium ion having the reactive moiety and the displaced metal ions. It is then dried thoroughly prior to the incorporation of the co-intercalating polymer or polymerizable oligomer or monomers. The resulting alkylonium ion having reactive moiety intercalated layered material is sufficiently organophilic and are capable of covalently linking the matrix polymer chains during in-situ polymerization while dispersing the layered material in the polymer matrix.

In accordance with the prefererred embodiment of the present invention, the alkylonium ion having reactive moiety intercalated layered material is co-intercalated with any polymer or any polymerizable oligomer or monomers and then polymerized in-situ, to get the nanocomposite compositions or the concentrates. Later the concentrates can be diluted by dispering it in to one or more melt processible thermoplastic and/or thermosetting matrix oligomers or polymers, or mixtures thereof, by direct compounding. Most preferably the matrix polymer is co-intercalated into the alkyloniumion having reactive moiety intercalated layered material, further increasing the interlayer distance by atleast 3 Å, preferably by atleast 10 Å, by atleast 20 Å, preferably by atleast 25 Å, more preferably the layers are well separated and exfoliated in the matrix polymer. The co-intercalation of the matrix polymer is done either by direct compounding of the polymer with the intercalated material under melt or by mixing the polymerizable oligomers or the monomers under melt or in solution followed by subjecting it to polymerization conditions to form the matrix polymer. In the most preferred embodiment of the present invention the co-intercalation is done by mixing the polymerizable monomers or the oligomers under melt or in solution followed by polymerization at suitable conditions under melt or in solid state, and under these conditions the reactive moiety in the alkylonium ion of the modifier present in the layered material may react with the matrix polymer chains and form covalent link and disperse or exfoliate the layered material in the polymer matrix.

### EXAMPLE 1

Equivalent amounts of 2,2-bis-(4-hydroxyphenyl)tridecyl bromide (4.4746 g, 0.010 mol) and 1,2-dimethylimidazole (0.9613g, 0.010 mol) were mixed and heated at 100°C for 8 hours under nitrogen atmosphere. The melted mixture solidified after the reaction. 2,2-bis-(4-hydroxyphenyl)tridecyl-(1,2-dimethylimidazolium) bromide was obtained in pure form and used without further purification.

### EXAMPLE 2

Equivalent amounts of 2,2-bis-(4-hydroxyphenyl)tridecyl bromide (4.4746 g, 0.010 mol) and triphenylphosphine (2.631g, 0.010 mol) were mixed and heated at 100°C for 8 hours under nitrogen atmosphere. The melted mixture solidified after the reaction. 2,2-bis-(4-hydroxyphenyl)tridecyl triphenylphosphonium bromide was obtained in pure form and used without further purification.

### EXAMPLE 3-7

The Na montmorinollite (10 g) with CEC 92 meq/100 g, d spacing 12 Å was dispersed in water/methanol (300 mL) by stirring with an over head stirrer at room temperature for 2 hours. The modifier (11 meq), as shown in table 1, dissolved in methanol/water mixture was poured into the dispersion of clay slowly in drops and stirred for 24 hours at 65 °C. The reaction mixture is cooled, centrifuged and washed several times with distilled water and methanol until all the bromide ions are washed off. The organoclay obtained was freeze dried under vacuum overnight. The organoclay was obtained as fine, dry powder. The interlayer d- spacing for the organo modified montmorillonite was measured from wide angle X-ray diffraction (WAXD) and is shown in table 1. The onset of decomposition and organic contents were measured from the thermogravimetric analysis upon charring the organoclay at 900 °C and are shown in table 1.

**Table 1**

| E. g. | Modifier | d-spacing for organoclay (Å) | Organic content (wt%) | Onset of decomposition °C |
|---|---|---|---|---|
| 3 | 12,12-bis-(4-hydroxyphenyl) triphenyl phosphonium bromide | 28.7 | 40 | 250 |
| 4 | 12,12-bis-(4-hydroxyphenyl)-1,2-dimethylimidazolium) bromide | 23.0 | 32 | 250 |
| 5 | Hexadecyltriphenyl phosphonium bromide | 21.5 | 33 | 300 |
| 6 | Hexadecyl-1,2-dimethyl imidazolium bromide | 18.5 | 26 | 315 |
| 7 | Dihydrogenated tallow dimethylammonium bromide | 24.8 | 38 | 200 |

### EXAMPLE 8

Polycarbonate clay nanocomposite was prepared via in-situ polymerization by mixing diphenyl carbonate (9.110g), bisphenol-A (8.908 g) and organoclay of example 3 (0.500 g) along with NaOH/tetramethylammonium hydroxide as the catalyst using a overhead stirrer heated to melt at 180 °C under nitrogen atmosphere for 15 minutes. Then the temperature was raised to 290 °C in stages of 210 °C, 240°C, 260°C and then to 290°C, while reducing the pressure in stages of 180 mbar, 100 mbar, 20 mbar, 3.5 mbar and finally to <0.010 mbar over a period of 165 minutes. Then it is kept at 290 °C for a period of 120 minutes under the vacuum of <0.010 mbar to get the nanocomposite. The nanocomposite obtained was characterized by transmission electron microscope (TEM) and WAXD and they showed that the layered silicates are completely dispersed and exfoliated in the matrix polycarbonate with no peaks for the clay in the WAXD. The molecular weights of the polymer in the nanocomposite were determined by gel permeation chromatography (GPC) and were found to be number average molecular weight (Mn) of 16500 and dispersity of 2.2.

### EXAMPLE 9

Polycarbonate clay nanocomposite was prepared via in-situ polymerization by mixing diphenyl carbonate (9.110g), bisphenol-A (8.908 g, mol) and organoclay of example 4 (0.500 g) along with NaOH/tetramethylammonium hydroxide as the catalyst using a overhead stirrer heated to melt at 180°C under nitrogen atmosphere for 15 minutes. Then the temperature was raised to 290 °C in stages of 210 °C, 240°C, 260°C and then to 290°C, while reducing the pressure in stages of 180 mbar, 100 mbar, 20 mbar, 3.5 mbar and finally to <0.010 mbar over a period of 165 minutes. Then it is kept at 290 °C for a period of 120 minutes under the vacuum of <0.010 mbar to get the nanocomposite. The nanocomposite obtained was characterized by TEM and WAXD and they showed that the layered silicates are completely dispersed and exfoliated in the matrix polycarbonate with no peaks for the clay in the WAXD. The molecular weights of the polymer in the nanocomposite were determined by GPC and were found to be Mn of 14500 and dispersity of 2.4.

### COMPARATIVE EXAMPLE 1

Polycarbonate clay nanocomposite was prepared via in-situ polymerization by mixing diphenyl carbonate (9.111 g), bisphenol-A (8.980 g) and organoclay of example 5 (0.500 g) along with NaOH/tetramethylammonium hydroxide as the catalyst using a overhead stirrer heated to melt at 180 °C under nitrogen atmosphere for 15 minutes. Then the temperature was raised to 290 °C in stages of 210 °C, 240°C, 260°C and then to 290°C, while reducing the pressure in stages of 180 mbar, 100 mbar, 20 mbar, 3.5 mbar and finally to <0.010 mbar over a period of 165 minutes. Then it is kept at 290 °C for a period of 120 minutes under the vacuum of <0.010 mbar to get the nanocomposite. The nanocomposite obtained was characterized by WAXD and TEM and they showed that the layered silicates are flocculated in the matrix polycarbonate with the interlayer d-spacing of 17.8 A. The molecular weights of the polymer in the nanocomposite were determined by GPC and were found to be Mn of 9500 and dispersity of 2.1.

### COMPARATIVE EXAMPLE 2

Polycarbonate clay nanocomposite was prepared via in-situ polymerization by mixing diphenyl carbonate (9.111 g), bisphenol-A (8.980 g) and organoclay of example 6 (0.500 g) along with NaOH/tetramethylammonium hydroxide as the catalyst using a overhead stirrer heated to melt at 180 °C under nitrogen atmosphere for 15 minutes. Then the temperature was raised to 290 °C in stages of 210 °C, 240°C, 260°C and then to 290°C, while reducing the pressure in stages of 180 mbar, 100 mbar, 20 mbar, 3.5 mbar and finally to <0.010 mbar over a period of 165 minutes. Then it is kept at 290 °C for a period of 120 minutes under the vacuum of <0.010 mbar to get the nanocomposite. The nanocomposite obtained was characterized by WAXD and TEM and they showed that the layered silicates are dispersed in the matrix polycarbonate with the interlayer d-spacing of 27.6 A. The molecular weights of the polymer in the nanocomposite was determined by GPC and was found to be Mn of 9800 and dispersity of 2.2 .

### COMPARATIVE EXAMPLE 3

Polycarbonate clay nanocomposite was prepared via in-situ polymerization by mixing diphenyl carbonate (9.111 g), bisphenol-A (8.980 g) and organoclay of example 7 (0.500 g) along with NaOH/tetramethylammonium hydroxide as the catalyst using a overhead stirrer heated to melt at 180 °C under nitrogen atmosphere for 15 minutes. Then the temperature was raised to 290 °C in stages of 210 °C, 240°C, 260°C and then to 290°C o while reducing the pressure in stages of 180 mbar, 100 mbar, 20 mbar, 3.5 mbar and finally to <0.010 mbar over a period of 165 minutes. Then it is kept at 290 °C for a period of 120 minutes under the vacuum of <0.010 mbar to get the nanocomposite. The nanocomposite obtained was characterized by WAXD and TEM and they showed that the layered silicates are dispersed in the matrix polycarbonate with the interlayer d-spacing of 29.9 A. The molecular weights of the polymer in the nanocomposite were determined by GPC and were found to be Mn of 7800 and dispersity of 2.6. The molecular weight of the polymer in this nanocomposite is very low and the material also is found to be dark colored as compared to the products obtained from example 8, example 9, comparative example 1 and comparative example 2.

**The main advantages of the present invention are**
1) Provides the nanocomposite compositions in which the layered material is completely dispersed and exfoliated in the polymer matrix while the alkylonium ion having the reactive moiety is covalently linked to the matrix polymer chain.
2) Provide processes for the production of the nanocomposite compositions.

## Claims

1. A polymer-phyllosilicate nanocomposite composition comprising
a. 10-99.95 % by weight of a matrix polymer and
b. 0.05-90% by weight of a phyllosilicate selected from the group consisting of hydrophilic synthetic phyllosilicates and natural phyllosilicates intercalated with an alkylonium ion having a reactive moiety, wherein the alkylonium ion is a 2,2-bis(4-hydroxyphenyl)alkylonium salt having the formula I, 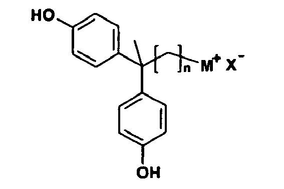
where n = 1 to 37, M= trialkylphosphonium, triarylphosphonium, triarylalkylphosphonium, ammonium or substituted cylic amidinium radical selected from the group consisting of pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, and dipyridyl, X = Cl, Br, I, BF₄, OTf, or NTf₂.

2. The composition as claimed in claim 1, wherein the matrix polymer is selected from the group consisting of polycarbonates, polyesters and epoxy resins.

3. The composition as claimed in claim 1, wherein the matrix polymer is a polycarbonate.

4. The composition as claimed in claim 1 wherein the alkylonium ion is associated with the surface of the phyllosilicate and capable of covalently link to the matrix polymer chain.

5. The composition as claimed in claim 1 wherein the phyllosilicate is homogeneously dispersed and/or exfoliated throughout the polymer matrix as nanosized particles.

6. The composition as claimed in claim 1, wherein the phyllosilicate is selected from the group consisting of natural smectite clays, synthetic smectite clays, kaolinite clays, mica, natural talcs, synthetic talcs, and combinations thereof.

7. The composition as claimed in claim 6, wherein the smectite clay is selected from the group comprising of montmorillonite, hectorite, saponite, beidellite, stevensite, nontronite, laponite, and combinations thereof.

8. The composition as claimed in claim 1, wherein the alkylonium ion is a 2,2-bis(4-hydroxyphenyl)alkylonium salt, wherein n = 11.

9. The composition as claimed in claim 1, wherein the alkylonium ion is a 2,2-bis(4-hydroxyphenyl)alkylonium salt, wherein M is triphenylphosphine.

10. The composition as claimed in claim 1, wherein the alkylonium ion is a 2,2-bis(4-hydroxyphenyl)alkylonium salt, wherein M is 1,2-dimethylimidazole.

11. The composition as claimed in claim 1, comprising 0.05 weight percent to 40 weight percent of a phyllosilicate material intercalated with an alkylonium ion having a reactive moiety (organophyllosilicate) and 60 weight percent to 99.95 weight percent of a matrix polymer, **characterized in that** the said intercalated layered silicate material is dispersed uniformly throughout the matrix polymer and/or exfoliated wherein the said alkyl onium ions are compatible with the matrix polymer or substantially covalently linked to the matrix polymer chain through the reactive moiety, and wherein the alkylonium ion is a 2,2-bis(4-hydroxyphenyl)alkylonium salt having the formula I, 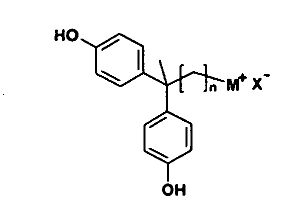 where n = 1 to 37, M = trialkylphosphonium, triarylphosphonium, triarylalkylphosphonium, ammonium or substituted cylic amidinium radical selected from the group consisting of pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, and dipyridyl, X= Cl, Br, I, BF₄, OTf, or NTf₂.

12. The composition as claimed in claim 11, wherein the matrix polymer is co-intercalated into the phyllosilicate material or the silicate layers are exfoliated.

13. The composition as claimed in claim 12, wherein the matrix polymer is co-intercalated into the layered silicate material while dispersing or exfoliating the layered material throughout the matrix polymer.

14. The composition as claimed in claim 13, wherein the matrix polymer is co-intercalated into the layered silicate material prior to dispersing or exfoliating the layered silicate material throughout the matrix polymer.

15. The composition as claimed in claim 11, wherein the matrix polymer used is a polymer or oligomer of the reaction product of bisphenols and diphenylcarbonate.

16. The composition as claimed in claim 1,comprising 40% to 99.95% by weight of a matrix polymer and 0.05% to 60% by weight of an intercalated organophyllosilicate material prepared by contacting a phyllosilicate with intercalant alkylonium ions having reactive moiety capable of compatibilize or covalently link the matrix polymer chain with a molar ratio of alkylonium ions having reactive moiety to phyllosilicate interlayer exchangeable cations of at least 0.25:1 to achieve sorption of the alkylonium ions between adjacent spaced layers of the phyllosilicate to expand the spacing between a predominance of the adjacent phyllosilicate platelets at least 3Å, when measured after sorption of the alkylonium ions, and a second intercalant disposed between adjacent spaced layers of the *phyllosilicate* material, said second intercalant comprising a thermosetting or thermoplastic oligomer or polymer, wherein the alkylonium ion is a 2,2-bis(4-hydroxyphenyl)alkylonium salt having the formula I, 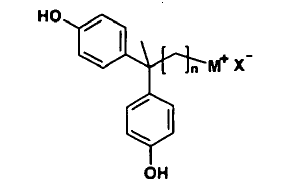 where n = 1 to 37, M = trialkylphosphonium, triarylphosphonium, triarylalkylphosphonium, ammonium or substituted cylic amidinium radical selected from the group consisting of pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, and dipyridyl, X= Cl, Br, I, BF₄, OTf, or NTf_{2.}

17. The composition as claimed in claim 16, wherein the intercalated phyllosilicate is exfoliated into a predominance of individual platelets.

18. The composition as claimed in claim 16, wherein the molar ratio of intercalant alkylonium ions having reactive moiety to phyllosilicate interlayer exchangeable cations is at least 0.5:1.

19. The composition as claimed in claim 16, wherein the molar ratio of intercalant alkylonium ions having reactive moiety:phyllosilicate interlayer exchangeable cations is at least 1:1.

20. The composition as claimed in claim 16, wherein the matrix polymer used is selected from the group consisting of epoxy, polyamide, polyvinyl alcohol, polycarbonate, polyvinylimine, polyvinylpyrrolidone, polyethylene terephthalate and polybutylene terephthalate.

21. The composition as claimed in claim 16, wherein the matrix polymer is a polycarbonate.

22. The composition as claimed in claim 1, comprising 10% to 90% by weight of a layered material intercalated with alkylonium ions having a reactive group and 10% to 90% by weight percent of a matrix oligomer or polymer, wherein the intercalated or the exfoliated layered silicate material is dispersed uniformly throughout the matrix polymer, wherein the alkylonium ion is a 2,2-bis(4-hydroxyphenyl)alkylonium salt having the formula I, 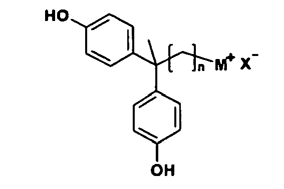 where n = 1 to 37, M = trialkylphosphonium, triarylphosphonium, triarylalkylphosphonium, ammonium or substituted cylic amidinium radical selected from the group consisting of pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, and dipyridyl, X = Cl, Br, I, BF₄, OTf, or NTf₂.

23. The composition as claimed in claim 22, wherein the matrix polymer is intercalated into the layered silicate material.

24. The composition as claimed in claim 23, wherein the matrix polymer is intercalated into the layered silicate material while dispersing or exfoliating the layered material throughout the matrix polymer.

25. The composition as claimed in claim 24, wherein the matrix polymer is intercalated into the layered silicate material prior to dispersing or exfoliating the layered silicate material throughout the matrix polymer.

26. The composition in accordance with claim 21, wherein both the matrix polymer and the polymer intercalated into and/or exfoliate the layered material are a polymer or oligomer of the reaction product of bisphenols and diphenylcarbonate.

27. The composition as claimed in claim 22, wherein the layered silicate material used is first intercalated with alkylonium ions having reactive moiety prior to intercalating the layered material with the polymer of bisphenol and diphenylcarbonate.

28. A process for the preparation of the polymer-phyllosilicate nanocomposite composition of claim 1 comprising the steps of
a. mixing 10-99.95 % by weight of a matrix polymer and 0.05-90% by weight of a phyllosilicate selected from the group consisting of hydrophilic synthetic phyllosilicates and natural phyllosilicates intercalated with a modifier and an alkylonium ion having reactive moiety, wherein the alkylonium ion is a 2,2-bis(4-hydroxyphenyl)alkylonium salt having the formula I, 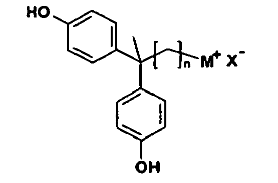 where n=1 to 37, M= trialkylphosphonium, triarylphosphonium, triarylalkylphosphonium, ammonium or substituted cylic amidinium radical selected from the group consisting of pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, and dipyridyl, X = Cl, Br, I, BF₄, OTf, or NTf₂.
b. intercalating a layered silicate material by contacting it with alkylonium ions having reactive group to obtain the intercalated layered material,
c. mixing the above said intercalated layered material with a melt of the matrix polymer, under stirring, to intercalate and exfoliate the said matrix polymer between adjacent platelets of the layered silicate material to obtain the desired polymer-exfoliated phyllosilicate nanocomposite composition.

29. The process as claimed in claim 28, wherein mixing of intercalate and the polymer melt is accomplished by extruding the intercalate / polymer melt mixture.

30. A process for the preparation of the polymer-phyllosilicate nanocomposite of claim 22 comprising the steps of
a. mixing 40% to 99.95% by weight of a matrix polymer and about 0.05% to about 60% by weight of an intercalate and/or exfoliate,
b. intercalating and/or exfoliating a layered silicate material by contacting the layered silicate material with alkylonium ions having reactive moiety to exchange the alkylonium ions having reactive moiety for at least a portion of the interlayer exchangeable cations of the layered material, wherein the alkylonium ion is a 2,2-bis(4-hydroxyphenyl)alkylonium salt having the formula I, 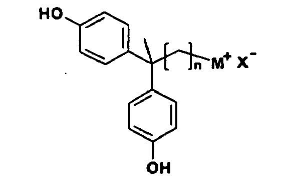 where n =1 to 37, M = trialkylphosphonium, triarylphosphonium, triarylalkylphosphonium, ammonium or substituted cylic amidinium radical selected from the group consisting of pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, and dipyridyl, X = Cl, Br, I, BF₄, OTf, or NTf₂.
c. mixing the above said intercalated layered silicate material with one or more monomer or oligomer reactants and subjecting it to conditions sufficient to polymerize the said monomer or oligomer reactants to form said matrix polymer.

31. A process for the preparation of the polymer-phyllosilicate nanocomposite of claim 16 comprising the steps of
a. contacting a layered silicate material with alkylonium ions having reactive moiety to intercalate the alkylonium ions having reactive moiety between the adjacent layers of said layered silicate material, wherein the alkylonium ion is a 2,2-bis(4-hydroxyphenyl)alkylonium salt having the formula I, 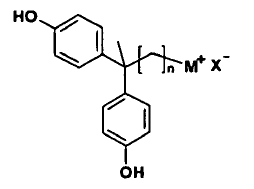 where n = 1 to 37, M= trialkylphosphonium, triarylphosphonium, triarylalkylphosphonium, ammonium or substituted cylic amidinium radical selected from the group consisting of pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phenazine, imidazopyridine, and dipyridyl, X = Cl, Br, I, BF₄, OTf, or NTf₂.
b. increasing the spacing between adjacent layers of the layered material at least 3Å, simultaneously or subsequently contacting the above said intercalated layered silicate material with a solution or dispersion of an oligomer or polymer to intercalate the oligomer or polymer between the adjacent layers of the said layered silicate material to expand the spacing between the adjacent layers at least an additional 3 Å, and
c. mixing the layered silicate material, having said alkylonium ions having reactive moiety and said oligomer or polymer intercalated between adjacent layers and/or exfoliated, with an oligomer or polymer matrix material.

32. The process of claim 31, wherein the oligomer or polymer intercalated between adjacent layers of said layered silicate material or exfoliated is the same oligomer or polymer matrix material mixed with said intercalate.

33. A process as claimed in claim 31, wherein the exchanging is carried out by first dispersing the phyllosilicate in a polar solvent and then adding the alkylonium salt and stirring it together at a temperatures in the range of 10 °C to 100°C for a period of 0.5 h to 24 h and then filtering the organophyllosilicate cake, followed by washing it with a solvent to remove excess salt and the metallic salt which has come out of the adjacent sheets of the phyllosilicate, and drying it under vacuum in a freeze drier to obtain the desired fine particles of organophyllosilicate.

## Patentansprüche

1. Polymer-Phyllosilicat-Nanokompositzusammensetzung umfassend:
a. 10 bis 99,95 Gew.% eines Matrixpolymers und
b. 0,05 bis 90 Gew.% eines Phyllosilicats gewählt aus der Gruppe bestehend aus hydrophilen synthetischen Phyllosilicaten interkaliert mit einem Alkyloniumion mit einem reaktiven Anteil, wobei das Alkyloniumion ein 2,2-Bis(4-Hydroxiphenyl)-alkyloniumsalz ist, mit der Formel I, 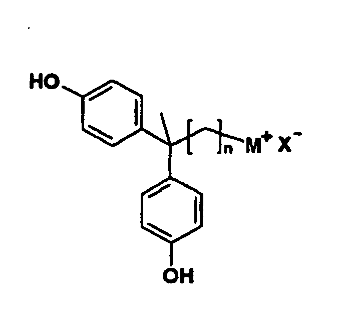
wobei n = 1 bis 37, M = Trialkylphosphonium, Triarylphosphonium, Triarylalkylphosphonium, Ammonium oder substituierter zyklischer Amidiniumradikal gewählt aus der Gruppe bestehend aus Pyrrol, Imidazol, Thiazol, Oxazol, Pyridin, Pyrimidin, Chinolin, Isochinolin, Indol, Purin, Benzimidazol, Benzothiazol, Benzoxyzol, Pyrazin, Chinoxalin, Chinozolin, Acridin, Phenazin, Imidazolpyridin und Dipyridyl, X = Cl, Br, I, BF₄, OTf, oder NTf₂.

2. Zusammensetzung nach Anspruch 1, wobei das Matrixpolymer gewählt ist aus der Gruppe bestehend aus Polycarbonaten, Polyestern und Epoxidharzen.

3. Zusammensetzung nach Anspruch 1, wobei das Matrixpolymer ein Polycarbonat ist.

4. Zusammensetzung nach Anspruch 1, wobei das Alkyloniumion mit der Oberfläche des Phyllosilicat assoziiert ist und in der Lage ist, sich mit der Matrixpolymerkette kovalent zu verbinden.

5. Zusammensetzung nach Anspruch 1, wobei das Phyllosilicat homogen durch die Polymermatrix als Nanogrößenpartikel dispergiert und/oder exfoliert ist.

6. Zusammensetzung nach Anspruch 1, wobei das Phyllosilicat gewählt ist aus der Gruppe bestehend aus natürlichen Smektittonen, synthetischen Smektittonen, Kaolinittonen, Glimmer, natürlichen Talken, synthetischen Talken und deren Kombinationen.

7. Zusammensetzung nach Anspruch 6, wobei der Smektitton gewählt ist aus der Gruppe umfassend Montmorillonit, Hektorit, Saponit, Beidellit, Stevensit, Nontronit, Laponit und deren Kombinationen.

8. Zusammensetzung nach Anspruch 1, wobei das Alkyloniumion ein 2,2-Bis(4-hydroxyphenyl)alkyloniumsalz ist, wobei n = 11.

9. Zusammensetzung nach Anspruch 1, wobei das Alkyloniumion ein 2,2-Bis(4-hydroxyphenyl)alkyloniumsalz ist, wobei M Triphenylphosphin ist.

10. Zusammensetzung nach Anspruch 1, wobei das Alkyloniumion ein 2,2-Bis(4-hydroxphenyl)alkyloniumsalz ist, wobei M 1,2-Dimethylimidazol ist.

11. Zusammensetzung nach Anspruch 1, umfassend 0,05 Gew.% bis 40 Gew.% eines Phyllosilicatmaterials interkaliert mit einem Alkyloniumion mit einem reaktiven Teil (Organophyllosilicat) und 60 Gew.% bis 99,95 Gew.% eines Matrixpolymers, **dadurch gekennzeichnet, dass** das interkaliert Schictslicatmaterial gleichmäßig durch das Matrixpolymer dispergiert und/oder exfoliert ist, wobei die Alkyloniumionen mit dem Matrixpolymer kompatibel sind oder im Wesentlichen kovalent mit der Matrixpolymerkette durch den reaktiven Teil verbunden sind, und wobei das Alkyloniumion ein 2,2-Bis(4-hydroxphenyl)alkyloniumsalz mit der Formel I ist, 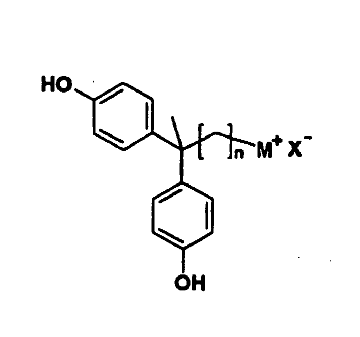 wobei n = 1 bis 37, M = Trialkylphosphonium, Triarylphosphonium, Triarylalkylphosphonium, Ammonium oder substituiertes zyklisches Amidiniumradikal gewählt aus der Gruppe bestehend aus Pyrrol, Imidazol, Thiazol, Oxazol, Pyridin, Pyrimidin, Chinolin, Isochinolin, Indol, Purin, Benzimidazol, Benzothiazol, Benzoxazol, Pyrazin, Chinoxalin, Chinozolin, Acridin, Phenazin, Imidazolpyridin und Dipyridyl, X = Cl, Br, I, BF₄, OTf oder NTf₂.

12. Zusammensetzung nach Anspruch 11, wobei das Matrixpolymer in das Phyllosilicatmaterial kointerkaliert ist oder die Silicatschichten exfoliert sind.

13. Zusammensetzung nach Anspruch 12, wobei das Matrixpolymer in das Schichtsilicatmaterial kointerkaliert ist, während das Schichtmaterial durch das Matrixpolymer dispergiert oder exfoliert ist.

14. Zusammensetzung nach Anspruch 13, wobei das Matrixpolymer in das Schichtsilicatmaterial kointerkaliert ist, vor dem Dispergieren oder Exfolieren des Schichtsilicatmaterials durch das Matrixpolymer.

15. Zusammensetzung nach Anspruch 11, wobei das verwendete Matrixpolymer ein Polymer oder Oligomer des Reaktionsproduktes von Bisphenolen und Diphenylcarbonat ist.

16. Zusammensetzung nach Anspruch 1, umfassend 40% bis 99,95 Gew.% eines Matrixpolymers und 0,05% bis 60 Gew.% eines interkalierten Organophyllosilicatmaterials, hergestellt durch das Inkontaktbringen eines Phyllosilicats mit interkalierten Alkyloniumionen mit einem reaktiven Teil, welche in der Lage sind, die Matrixpolymerkette zu kompatibilisieren oder kovalent zu verbinden, mit einem Molverhältnis von Alkyloniumionen mit reaktivem Teil zu den austauschbaren Phyllosilicatzwischenschichtkationen von wenigstens 0,25:1, um Sorption der Alkyloniumionen zwischen benachbarten, voneinander beabstandeten Schichten des Phyllosilicats zu erzielen, um den Abstand zwischen einem Übergewicht von benachbarten Phyllosilicatplättchen um wenigstens 3 Å auszudehnen, gemessen nach der Sorption der Alkyloniumionen, und einem zweiten Interkalationsmaterial abgeschieden zwischen benachbarten, beabstandeten Schichten des Phyllosilicatmaterials, wobei das zweite Interkalationsmaterial ein thermohärtendes oder thermoplastisches Oligomer oder Polymer umfasst, wobei das Alkyloniumion ein 2,2-Bis(4-hydroxphenyl)-alkyloniumsalz mit der Formel I ist 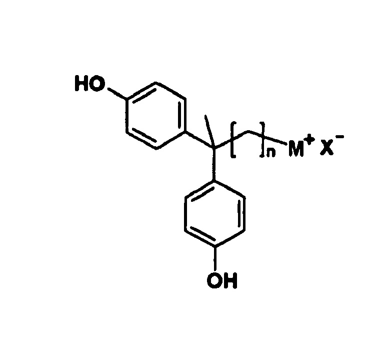 wobei n = 1 bis 37, M = Trialkylphosphonium, Triarylphosphonium, Triarylalkylphosphonium, Ammonium oder substituiertes zyklisches Amidiniumradikal, gewählt aus der Gruppe bestehend aus Pyrrol, Imidazol, Thiazol, Oxazol, Pyridin, Pyrimidin, Chinolin, Isochinolin, Indol, Purin, Benzimidazol, Benzothiazol, Benzoxazol, Pyrazin, Chinoxalin, Chinozolin, Acridin, Phenazin, Imidazopyridin und Dipyridyl, X = Cl, Br, I, BF₄, OTf oder NTf₂.

17. Zusammensetzung nach Anspruch 16, wobei das interkalierte Phyllosilicat zu einem Übergewicht der einzelnen Plättchen exfoliert ist.

18. Zusammensetzung nach Anspruch 16, wobei das Molverhältnis von interkalierenden Alkyloniumionen mit einem reaktiven Teil zu den austauschbaren Phyllosilicatzwischenschichtkationen wenigstens 0,5:1 beträgt.

19. Zusammensetzung nach Anspruch 16, wobei das Molverhältnis von interkalierenden Alkyloniumionen mit einem reaktiven Teil : austauschbaren Phyllosilicatzwischenschichtkationen wenigstens 1:1 beträgt.

20. Zusammensetzung nach Anspruch 16, wobei das verwendete Matrixpolymer gewählt ist aus der Gruppe bestehend aus Epoxid, Polyamid, Polyvinylalkohol, Polycarbonat, Polyvinylimin, Polyvinylpyrrolidon, Polyethylenterephthalat und Polybutylenterephthalat.

21. Zusammensetzung nach Anspruch 16, wobei das Matrixpolymer ein Polycarbonat ist.

22. Zusammensetzung nach Anspruch 1, umfassend 10 bis 90 Gew.% eines Schichtmaterials interkaliert mit Alkyloniumionen mit einer reaktiven Gruppe und 10 bis 90 Gew.% eines Matrixoligomers oder -polymers, wobei das interkalierte oder exfolierte Schichtsilicatmaterial gleichförmig durch das Matrixpolymer dispergiert ist, wobei das Alkyloniumion ein 2,2-Bis(4-hydroxyphenyl)alkyloniumsalz mit der Formel I ist, 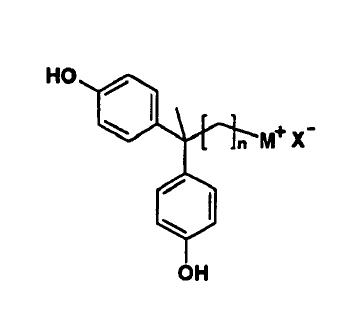 wobei n = 1 bis 37, M = Trialkylphosphonium, Triarylphosphonium, Triarylalkylphosphonium, Ammonium oder substituiertes zyklisches Amidiniumradikal, gewählt aus der Gruppe bestehend aus Pyrrol, Imidazol, Thiazol, Oxazol, Pyridin, Pyrimidin, Chinolin, Isochinolin, Indol, Purin, Benzimidazol, Benzothiazol, Benzoxazol, Pyrazin, Chinoxalin, Chinozolin, Acridin, Phenazin, Imidazopyridin und Dipyridyl, X = Cl, Br, I, BF₄, OTf oder NTf₂.

23. Zusammensetzung nach Anspruch 22, wobei das Matrixpolymer in das Schichtsilicatmaterial interkaliert ist.

24. Zusammensetzung nach Anspruch 23, wobei das Matrixpolymer in das Schichtsilicatmaterial interkaliert ist, während das Schichtmaterial durch das Matrixpolymer dispergiert oder exfoliert wird.

25. Zusammensetzung nach Anspruch 24, wobei das Matrixpolymer in das Schichtsilicatmaterial interkaliert ist, vor dem Dispergieren oder Aufblättern des Schichtsilicatmaterials durch das Matrixpolymer.

26. Zusammensetzung nach Anspruch 21, wobei sowohl das Matrixpolymer als auch das Polymer, welches in das Schichtmaterial interkaliert und/oder aufgeblättert ist, ein Polymer oder Oligomer des Reaktionsproduktes von Bisphenolen und Diphenylcarbonat ist.

27. Die Zusammensetzung nach Anspruch 22, wobei das verwendete Schichtsilicatmaterial zunächst mit Alkyloniumionen mit einem reaktiven Anteil interkaliert wird, bevor das Schichtmaterial mit dem Polymer von Bisphenol und Diphenylcarbonat interkaliert wird.

28. Verfahren zur Herstellung der Polymerphyllosilicatnanokompositzusammensetzung nach Anspruch 1, umfassend die Schritte:
a. Mischen von 10 bis 99,95 Gew.% eines Matrixpolymers und 0,05 bis 90 Gew.% eines Phyllosilicats gewählt aus der Gruppe bestehend aus hydrophilen synthetischen Phyllosilicaten und natürlichen Phyllosilicaten interkaliert mit einem Modifikator und einem Alkyloniumion mit einem reaktiven Anteil, wobei das Alkyloniumion ein 2,2-Bis(4-Hydrophenyl)-alkyloniumsalz mit der Formel I ist, 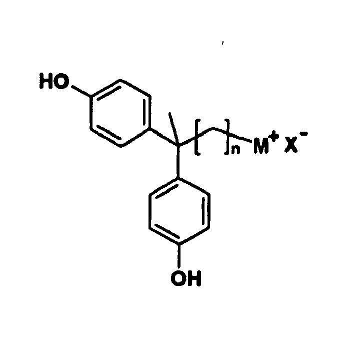 wobei n = 1 bis 37, M = Trialkylphosphonium, Triarylphosphonium, Triarylalkylphosphonium, Ammonium oder substituiertes, zyklisches Amidiniumradikal, gewählt aus der Gruppe bestehend aus Pyrrol, Imidazol, Thiazol, Oxazol, Pyridin, Pyrimidin, Chinolin, Isochinolin, Indol, Purin, Benzimidazol, Benzothiazol, Benzoxazol, Pyrazin, Chinoxalin, Chinozolin, Acridin, Phenazin, Imidazopyridin und Dipyridyl, X = Cl, Br, I, BF₄, OTf oder NTf₂.
b. Interkalieren eines Schichtsilicatmaterials durch das In-Kontakt-bringen desselben mit Alkyloniumionen mit einer reaktiven Gruppe, um das interkalierte Schichtmaterial zu erhalten,
c. Mischen des obigen interkalierten Schichtmaterials mit einer Schmelze des Matrixpolymers unter Rühren, um das Matrixpolymer zwischen den einzelnen Plättchen des Schichtmaterials zu interkalieren und aufzublättern, um so die gewünschte polymer-aufgeblätterte Phyllosilicatnanokompositzusammensetzung zu erhalten.

29. Verfahren nach Anspruch 28, wobei das Mischen des Interkalationsmaterials und der Polymerschmelze durch das Extrudieren des Interkalationsmaterials / Polymerschmelzemischung durchgeführt wird.

30. Verfahren zur Herstellung des Polymer-Phyllosilicatnanokomposits nach Anspruch 22 umfassend die Schritte:
a. Mischen von 40 bis 99,95 Gew.% eines Matrixpolymers und ungefähr 0,05% bis ungefähr 60 Gew.% eines Interkalationsmaterials und/oder Exfoliats,
b. Interkalieren und/oder Aufblättern eines Schichtsilicatmaterials durch das In-Kontakt-bringen des Schichtsilicatmaterials mit Alkyloniumionen mit einem reaktiven Anteil, um die Alkyloniumionen mit dem reaktiven Anteil durch wenigstens einen Teil der austauschbaren Zwischenschichtkationen des Schichtmaterials auszutauschen, wobei das Alkyloniumion ein 2,2-Bis(4-Hydroxyphenyl)-alkyloniumsalz mit der Formel I ist, 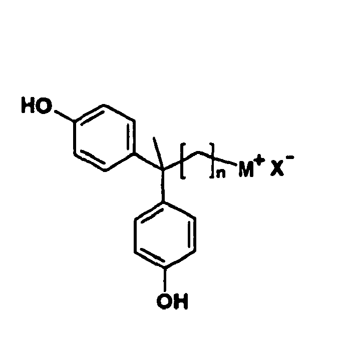 wobei n = 1 bis 37, M = Trialkylphosphonium, Triarylphosphonium, Triarylalkylphosphonium, Ammonium oder substituiertes, zyklisches Amidiniumradikal, gewählt aus der Gruppe bestehend aus Pyrrol, Imidazol, Thiazol, Oxazol, Pyridin, Pyrimidin, Chinolin, Isochinolin, Indol, Purin, Benzimidazol, Benzothiazol, Benzoxazol, Pyrazin, Chinoxalin, Chinozolin, Acridin, Phenazin, Imidazopyridin und Dipyridyl, X = Cl, Br, I, BF₄, OTf oder NTf₂.
c. Mischen des interkalierten Schichtsilicatmaterials mit einem oder mehreren Monomer oder Oligomerreaktanten und Unterwerfen desselben Bedingungen, die ausreichen, um die Monomer oder Oligomerreaktanten zu polymerisieren, um das Matrixpolymer zu bilden.

31. Verfahren zur Herstellung des Polymer-Phyllosilicatnanokomposits nach Anspruch 16, umfassend die Schritte:
a. In-Kontakt-bringen eines Schichtsilicatmaterials mit Alkyloniumionen mit einem reaktiven Anteil, um die Alkyloniumionen mit dem reaktiven Anteil zwischen den benachbarten Schichten des Schichtsilicatmaterials zu interkalieren, wobei das Alkyloniumion ein 2,2-Bis(4-Hydroxphenyl)-alkyloniumsalz mit der Formel I ist, 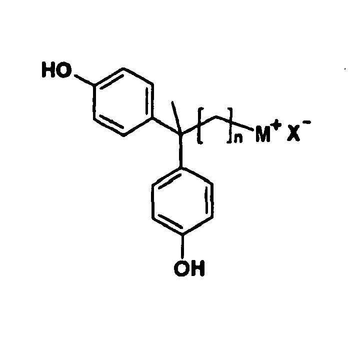 wobei n = 1 bis 37, M = Trialkylphosphonium, Triarylphosphonium, Triarylalkylphosphonium, Ammonium oder substituiertes, zyklisches Amidiniumradikal, gewählt aus der Gruppe bestehend aus Pyrrol, Imidazol, Thiazol, Oxazol, Pyridin, Pyrimidin, Chinolin, Isochinolin, Indol, Purin, Benzimidazol, Benzothiazol, Benzoxazol, Pyrazin, Chinoxalin, Chinozolin, Acridin, Phenazin, Imidazopyridin und Dipyridyl, X = Cl**,** Br, I, BF₄, OTf oder NTf₂.
b. Erhöhen des Abstandes zwischen den benachbarten Schichten des Schichtmaterials um wenigstens 3 Å, gleichzeitiges oder aufeinanderfolgendes In-Kontakt-bringen des obigen interkalierten Schichtsilicatmaterials mit einer Lösung oder Dispersion eines Oligomers oder Polymers, um das Oligomer oder Polymer zwischen die benachbarten Schichten des Schichtsilicatmaterials zu interkalieren, um den Abstand zwischen den benachbarten Schichten um wenigstens zusätzliche 3 Å auszudehnen, und
c. Mischen des Schichtsilicatmaterials mit den Alkyloniumionen mit dem reaktiven Anteil und dem Oligomer oder Polymer, welches zwischen den benachbarten Schichten interkaliert und/oder aufgeblättert ist, mit einem Oligomer oder Polymermatrixmaterial.

32. Verfahren nach Anspruch 31, wobei das Oligomer oder Polymer, welches zwischen den benachbarten Schichten des Schichtsilicatmaterials interkaliert oder aufgeblättert ist, das gleiche Oligomer oder Polymermatrixmaterial ist, welches mit dem Interkalationsmaterials vermischt ist.

33. Verfahren nach Anspruch 31, wobei der Austausch durchgeführt wird durch zunächst Dispergieren des Phyllosilicats in einem polaren Lösungsmittel und anschließend zugeben des Alkyloniumsalzes und Zusammenrühren bei einer Temperatur in dem Bereich von 10° bis 100°C für einen Zeitraum von 0,5 Stunden bis 24 Stunden und anschließend Filtern des Organophyllosilicatkuchens, gefolgt durch Waschen desselben mit einem Lösungsmittel, um einen Überschuss an Salz zu entfernen und das metallische Salz, welches aus den benachbarten Blättern des Phyllosilicats stammt, und Trocknen desselben unter Vakuum in einem Gefriertrockner, um die gewünschten feinen Partikel des Organosilicats zu erhalten.

## Revendications

1. Composition nanocomposite de polymère-phyllosilicate comprenant
a. 10-99,95 % en poids d'un polymère de matrice et
b. 0,05-90 % en poids d'un phyllosilicate choisi parmi des phyllosilicates synthétiques hydrophiles et des phyllosilicates naturels intercalé avec un ion alkylonium ayant une moitié réactive, où l'ion alkylonium est un sel de 2,2-bis(4-hydroxy-phényl)alkylonium ayant la formule I 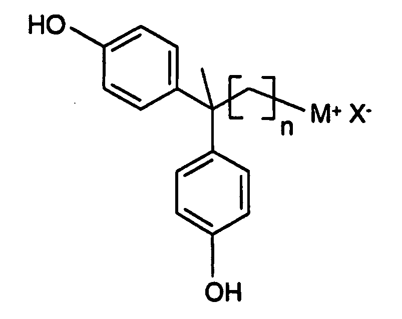
dans laquelle n = 1 à 37, M = un radical trialkylphosphonium, triarylphosphonium, triarylalkylphosphonium, ammonium ou amidinium cyclique substitué choisi dans le groupe constitué de pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phénazine, imidazopyridine et dipyridyle, X = Cl, Br, I, BF₄, OTf ou NTf₂.

2. Composition selon la revendication 1, dans laquelle le polymère de matrice est choisi dans le groupe constitué de polycarbonates, de polyesters et de résines époxy.

3. Composition selon la revendication 1, dans laquelle le polymère de matrice est un polycarbonate.

4. Composition selon la revendication 1, dans laquelle l'ion alkylonium est associé à la surface du phyllosilicate et est capable de se lier de manière covalente à la chaîne polymère de matrice.

5. Composition selon la revendication 1, dans laquelle le phyllosilicate est dispersé et/ou exfolié de manière homogène d'un bout à l'autre de la matrice polymère comme particules nanodimensionnées.

6. Composition selon la revendication 1, dans laquelle le phyllosilicate est choisi dans le groupe constitué d'argiles de smectite naturelle, d'argiles de smectite synthétique, d'argiles de kaolinite, de mica, de stéatites naturelles, de stéatites synthétiques et de combinaisons de ceux-ci.

7. Composition selon la revendication 6, dans laquelle l'argile de smectite est choisie dans le groupe comprenant la montmorillonite, l'hectorite, la saponite, la beidellite, la stévensite, la nontronite, la laponite et des combinaisons de celles-ci.

8. Composition selon la revendication 1, dans laquelle l'ion alkylonium est un sel de 2,2-bis(4-hydroxyphényl)alkylonium, où n = 11.

9. Composition selon la revendication 1, dans laquelle l'ion alkylonium est un sel de 2,2-bis(4-hydroxyphényl)alkylonium, où M est la triphénylphosphine.

10. Composition selon la revendication 1, dans laquelle l'ion alkylonium est un sel de 2,2-bis(4-hydroxyphényl)alkylonium, où M est le 1,2 -diméthylimidazole.

11. Composition selon la revendication 1 comprenant de 0,05 % en poids à 40 % en poids d'un matériau de phyllosilicate intercalé avec un ion alkylonium ayant une moitié réactive (organophyllosilicate) et de 60 % en poids à 99,95 % en poids d'un polymère de matrice, **caractérisée en ce que** ledit matériau de silicate en couches intercalé est uniformément dispersé d'un bout à l'autre du polymère de matrice et/ou exfolié, dans laquelle lesdits ions alkylonium sont compatibles avec le polymère de matrice ou liés de manière pratiquement covalente à la chaîne polymère de matrice par l'intermédiaire de la moitié réactive, et dans laquelle l'ion alkylonium est un sel de 2,2-bis(4-hydroxyphényl)alkylonium avant la formule I, 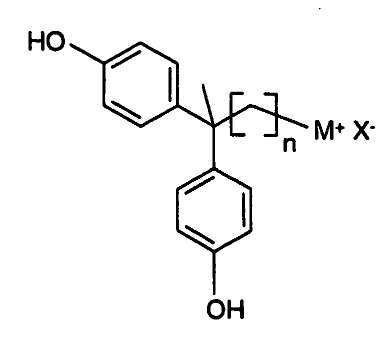 dans laquelle n = 1 à 37, M = un radical trialkylphosphonium, triarylphosphonium, triarylalkylphosphonium, ammonium ou amidinium cyclique substitué choisi dans le groupe constitué de pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phénazine, imidazopyridine et dipyridyle, X = Cl, Br, I, BF₄, OTf ou NTf₂.

12. Composition selon la revendication 11, dans laquelle le polymère de matrice est co-intercalé dans le matériau de phyllosilicate ou les couches de silicate sont exfoliées.

13. Composition selon la revendication 12, dans laquelle le polymère de matrice est co-intercalé dans le matériau de silicate en couches tout en dispersant ou exfoliant le matériau en couches d'un bout à l'autre du polymère de matrice.

14. Composition selon la revendication 13, dans laquelle le polymère de matrice est co-intercalé dans le matériau de silicate en couches avant la dispersion ou l'exfoliation du matériau de silicate en couches d'un bout à l'autre du polymère de matrice.

15. Composition selon la revendication 11, dans laquelle le polymère de matrice utilisé est un polymère ou un oligomère du produit de réaction de bisphénols et de carbonate de diphényle.

16. Composition selon la revendication 1 comprenant de 40 % a 99,95 % en poids d'un polymère de matrice et de 0,05 % à 60 % en poids d'un matériau d'organophyllosilicate intercalé préparé par mise en contact d'un phyllosilicate avec des ions alkylonium d'intercalation ayant une moitié réactive capable d'être compatible ou de se lier de manière covalente à la chaîne polymère de matrice avec un rapport molaire des ions alkylonium ayant une moitié réactive aux cations échangeables de couches intermédiaires de phyllosilicate d'au moins 0,25:1 pour réaliser une sorption des ions alkylonium entre des couches adjacentes espacées du phyllosilicate pour étendre l'espacement entre une prédominance des plaquettes de phyllosilicate adjacentes d'au moins 3 Å, mesuré après sorption des ions alkylonium, et d'un second matériau d'intercalation disposé entre des couches adjacentes espacées du matériau de phyllosilicate, ledit second matériau d'intercalation comprenant un oligomère ou un polymère thermodurcissable ou thermoplastique, dans laquelle l'ion alkylonium est un sel de 2,2-bis( 4-hydroxyphényl)alkylonium ayant la formule I, 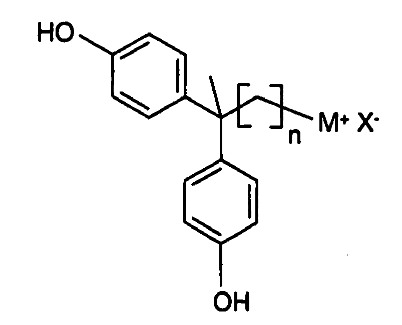 dans laquelle n = 1 à 37, M = un radical trialkylphosphonium, triarylphosphonium, triarylalkylphosphonium, ammonium ou amidinium cyclique substitué choisi dans le groupe constitué de pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phénazine, imidazopyridine et dipyridyle, X = Cl, Br, I, BF₄, OTf ou NTf₂.

17. Composition selon la revendication 16, dans laquelle le phyllosilicate intercalé est exfolié dans une prédominance de plaquettes individuelles.

18. Composition selon la revendication 16, dans laquelle le rapport molaire ions alkylonium d'intercalation ayant une moitié réactive : cations échangeables de couches intermédiaires de phyllosilicate est d'au moins 0,5:1.

19. Composition selon la revendication 16, dans laquelle le rapport molaire ions alkylonium d'intercalation ayant une moitié réactive : cations échangeables de couches intermédiaires de phyllosilicate est d'au moins 1: 1.

20. Composition selon la revendication 16, dans laquelle le polymère de matrice utilisé est choisi dans le groupe constitué d'époxy, de polyamide, de poly(alcool vinylique), de polycarbonate, de polyvinylimine, de polyvinylpyrrolidone, de poly(éthylene téréphtalate) et de poly(butylène téréphtalate).

21. Composition selon la revendication 16, dans laquelle le polymère de matrice est un polycarbonate.

22. Composition selon la revendication 1 comprenant de 10 % à 90 % en poids d'un matériau en couches intercalé avec des ions alkylonium ayant un groupe réactif et de 10 % à 90 % en poids d'un oligomère ou d'un polymère de matrice, dans laquelle le matériau de silicate en couches intercalé ou exfolié est uniformément dispersé d'un bout à l'autre du polymère de matrice, dans laquelle l'ion alkylonium est un sel de 2,2-bis( 4-hydroxyphényl)alkylonium ayant la formule I, 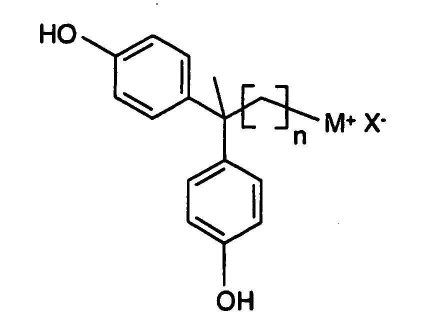 dans laquelle n = 1 à 37, M = un radical trialkylphosphonium, triarylphosphonium, triarylalkylphosphonium, ammonium ou amidinium cyclique substitué choisi dans le groupe constitué de pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phénazine, imidazopyridine et dipyridyle, X = CI, Br, I, BF₄, OTf ou NTf₂.

23. Composition selon la revendication 22, dans laquelle le polymère de matrice est intercalé dans le matériau de silicate en couches.

24. Composition selon la revendication 23, dans laquelle le polymère de matrice est intercalé dans le matériau de silicate en couches tout en dispersant ou exfoliant le matériau en couches d'un bout à l'autre du polymère de matrice.

25. Composition selon la revendication 24, dans laquelle le polymère de matrice est intercalé dans le matériau de silicate en couches avant la dispersion ou l'exfoliation du matériau de silicate en couches d'un bout à l'autre du polymère de matrice.

26. Composition selon la revendication 21, dans laquelle à la fois le polymère de matrice et le polymère intercalé et/ou exfolié dans le matériau en couches sont un polymère ou un oligomère du produit de réaction de bisphénols et de carbonate de diphényle.

27. Composition selon la revendication 22, dans laquelle le matériau de silicate en couches utilisé est dans un premier temps intercalé avec des ions alkylonium ayant une moitié réactive avant d'intercaler le matériau en couches avec le polymère de bisphénol et de carbonate de diphényle.

28. Procédé pour la préparation de la composition nanocomposite de polymère-phyllosilicate selon la revendication 1 comprenant les étapes consistant
a. à mélanger 10-99,95 % en poids d'un polymère de matrice et 0,05-90 % en poids d'un phyllosilicate choisi parmi des phyllosilicates synthétiques hydrophiles et des phyllosilicates naturels intercalés avec un agent de modification et un ion alkylonium ayant une moitié réactive, où l'ion alkylonium est un sel de 2,2-bis(4-hydroxyphényl)alkylonium ayant la formule I, 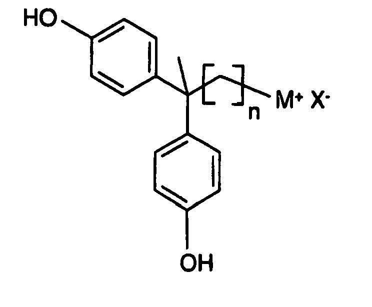 dans laquelle n = 1 à 37, M = un radical trialkylphosphonium, triarylphosphonium, triarylalkylphosphonium, ammonium ou amidinium cyclique substitué choisi dans le groupe constitué de pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phénazine, imidazopyridine et dipyridyle, X = Cl, Br, I, BF₄, OTf ou NTf₂.
b. à intercaler un matériau de silicate en couches en le mettant en contact avec des ions alkylonium ayant un groupe réactif pour obtenir le matériau en couches intercalé,
c. à mélanger ledit matériau en couches intercalé ci-dessus avec une masse en fusion du polymère de matrice, en agitant, pour intercaler et exfolier ledit polymère de matrice entre des plaquettes adjacentes du matériau de silicate en couches pour obtenir la composition nanocomposite de polymère-phyllosilicate exfolié souhaitée.

29. Procédé selon la revendication 28, dans lequel le mélange du matériau d'intercalation et de la masse en fusion de polymère est réalisé par extrusion du mélange de matériau d'intercalation/masse en fusion de polymère.

30. Procédé pour la préparation du nanocomposite de polymère-phyllosilicate selon la revendication 22 comprenant les étapes consistant
a. à mélanger de 40 % à 99,95 % en poids d'un polymère de matrice et d'environ 0,05 % à environ 60 % en poids d'un matériau d'intercalation et/ou d'un matériau d'exfoliation,
b. à intercaler et/ou à exfolier un matériau de silicate en couche en mettant le matériau de silicate en couches en contact avec des ions alkylonium ayant une moitié réactive pour échanger les ions alkylonium ayant une moitié réactive avec au moins une partie des cations échangeables de la couche intermédiaire du matériau en couches, dans lequel l'ion alkylonium est un sel de 2,2-bis(4-hydroxyphényl)alkylonium ayant la formule I, 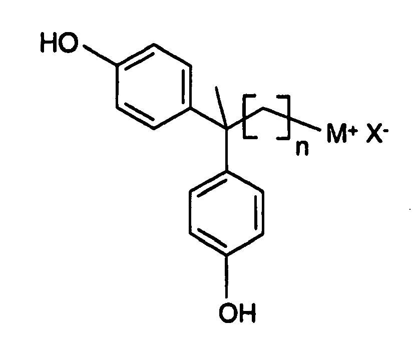 dans laquelle n = 1 à 37, M = un radical trialkylphosphonium, triarylphosphonium, triarylalkylphosphonium, ammonium ou amidinium cyclique substitué choisi dans le groupe constitué de pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phénazine, imidazopyridine et dipyridyle, X = Cl, Br, I, BF₄, OTf ou NTf₂.
c. à mélanger ledit matériau de silicate en couches intercalé ci-dessus avec un ou plusieurs corps réagissant monomères ou oligomères et à le soumettre à des conditions suffisantes pour polymériser lesdits corps réagissant monomères ou oligomères pour former ledit polymère de matrice.

31. Procédé pour la préparation du nanocomposite de polymère-phyllosilicate selon la revendication 16 comprenant les étapes consistant
a. à mettre un matériau de silicate en couches en contact avec des ions alkylonium ayant une moitié réactive pour intercaler des ions alkylonium ayant une moitié réactive entre les couches adjacentes dudit matériau de silicate en couches, dans lequel l'ion alkylonium est un sel de 2,2-bis(4-hydroxyphényl)alkylonium ayant la formule I, 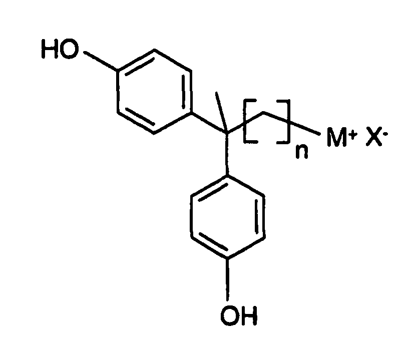 dans laquelle n = 1 à 37, M = un radical trialkylphosphonium, triarylphosphonium, triarylalkylphosphonium, ammonium ou amidinium cyclique substitué choisi dans le groupe constitué de pyrrole, imidazole, thiazole, oxazole, pyridine, pyrimidine, quinoline, isoquinoline, indole, purine, benzimidazole, benzothiazole, benzoxazole, pyrazine, quinoxaline, quinozoline, acridine, phénazine, imidazopyridine et dipyridyle, X = CI, Br, I, BF₄, OTf ou NTf₂.
b. à augmenter l'espacement entre les couches adjacentes du matériau en couches d'au moins 3 Å, à mettre en contact simultanément ou subséquemment ledit matériau de silicate en couches intercalé ci-dessus avec une solution ou une dispersion d'un oligomère ou d'un polymère pour intercaler l'oligomère ou le polymère entre les couches adjacentes dudit matériau de silicate en couches pour étendre l'espacement entre les couches adjacentes d'au moins 3 Å supplémentaires, et
c. à mélanger le matériau de silicate en couches présentant lesdits ions alkylonium ayant une moitié réactive et ledit oligomère ou polymère intercalé entre les couches adjacentes et/ou exfolié, avec un matériau de matrice oligomère ou polymère.

32. Procédé selon la revendication 31, dans lequel l'oligomère ou polymère intercalé entre des couches adjacentes dudit matériau de silicate en couches ou exfolié est le même matériau de matrice oligomère ou polymère mélangé avec ledit matériau d'intercalation.

33. Procédé selon la revendication 31, dans lequel l'échange est réalisé en dispersant dans un premier temps le phyllosilicate dans un solvant polaire et en ajoutant ensuite le sel d'alkylonium et en les agitant ensemble à une température dans l'intervalle de 10°C à 100°C sur une durée de 0,5 h à 24 h et en filtrant ensuite le gâteau d'organophyllosilicate, suivi par un lavage de celui-ci avec un solvant pour éliminer le sel en excès et le sel métallique qui provient des feuilles adjacentes du phyllosilicate, et en le séchant sous vide dans un dispositif de lyophilisation pour obtenir les fines particules souhaitées d'organophyllosilicate.
